# EUROPEAN PATENT APPLICATION

(11) **EP 4 733 644 A1**
(43) Date of publication of application: **29.04.2026**
(21) Application number: 24871547.6
(22) Date of filing: 09.08.2024
(51) Int. Cl.: F16K 31/04, F16K 5/06, F16K 11/06

(54) **ELECTRIC VALVE**

(30) Priority: 26.09.2023 JP 2023162881
(71) Applicant: Nippon Thermostat Co., Ltd., Kiyose-shi Tokyo 204-0003 (JP)
(72) Inventor: KUMASHIRO, Tsuyoshi, Kiyose-shi, Tokyo 204-0003 (JP); SATO, Junichi, Kiyose-shi, Tokyo 204-0003 (JP)
(74) Representative: Weickmann & Weickmann PartmbB
(86) International application number: PCT/JP2024/028765
(87) International publication number: WO 2025/069745

(57) **Abstract**

An electric valve 100 includes: first valve body 83 formed in cylindrical shape having valve opening 85 and first center axis X5; second valve body 84 formed in cylindrical shape having valve opening 86 and second center axis X6; and first engagement portion 81 arranged coaxially with the first center axis X5 and unable to rotate relative to the first valve body 83. The first valve body 83 and the second valve body 84 are arranged coaxially with the first center axis X5 and the second center axis X6, the second valve body 84 includes second engagement portion 91 formed in a shape capable of engaging with the first engagement portion 81, and the first valve body 83 and the second valve body 84 can be coupled at plurality of rotational-direction relative angles using the first center axis X5 and the second center axis X6 as rotation center.

## Description

### Technical Field

The present invention relates to an electric valve that adjusts a flow rate of fluid.

### Background Art

As disclosed in Japanese Patent Application Laid-Open No. 2015-218763, an electric valve that adjusts a flow rate according to a predetermined condition has been used conventionally. The electric valve disclosed in Japanese Patent Application Laid-Open No. 2015-218763 includes an inlet portion for cooling water that is fluid for cooling devices and a plurality of outlet portions for sending the incoming cooling water, and the cooling water is sent to the devices through pipes connected to the respective outlet portions. The electric valve disclosed in Japanese Patent Application Laid-Open No. 2015-218763 is provided in a cylinder head of an automotive engine, and introduces the cooling water into the valve device through the inlet portion.

The electric valve disclosed in Japanese Patent Application Laid-Open No. 2015-218763 includes a motor and a valve system, the valve system including a valve body that is controlled to be opened and closed by the motor via a speed reduction mechanism. The cooling water is sent from the electric valve to a heat exchanger for heating, an oil cooler, and a radiator, and the sending of the cooling water from the electric valve is controlled by the valve body included in the electric valve. The valve body is electrically controlled by an in-vehicle electronic controller in accordance with cooling water temperature, vehicle operating states, and the like, and sends the introduced cooling water to the heat exchanger for heating, the oil cooler, and the radiator by the opening and closing thereof.

The valve body is formed in a cylindrical shape, and is provided with valve openings of two systems to send the cooling water to the devices. The valve openings are provided on the outer peripheral surface of the valve body to be shifted from each other in the direction of the center axis. Because the valve body is integrally rotated with the motor, the valve openings of two systems are integrally rotated in the same direction. For that reason, rotational-direction relative angles of the valve openings and sizes of the valve openings are determined so that the open/close control of the valve openings of two systems can be performed in accordance with the cooling water temperature. With this configuration, the electric valve can send the cooling water to the devices at the optimum times.

### Citation List

### Patent Literature

Patent Literature 1: Japanese Patent Application Laid-Open No. 2015-218763

### Summary of Invention

### Technical Problem

However, rotational-direction relative positions and rotational-direction lengths of the plurality of valve openings in the valve body are different depending on a vehicle on which the electric valve is mounted, the types of devices connected to the electric valve, and the like. For that reason, it is necessary to produce valve bodies of which each has a plurality of valve openings with different rotational-direction relative angles, and thus it takes a lot of trouble over development and manufacturing.

The present invention has been made to solve the above problem, and an object of the present invention is to provide an electric valve that can be produced by easily changing the positions of the valve openings.

### Solution to Problem

An electric valve according to the present invention includes: a first valve body that is formed in a cylindrical shape and has a valve opening and a first center axis; a second valve body that is formed in a cylindrical shape and has a valve opening and a second center axis; and a first engagement portion that is arranged coaxially with the first center axis and in a state of being unable to rotate relative to the first valve body, the first valve body and the second valve body are arranged coaxially with the first center axis and the second center axis, and the second valve body includes a second engagement portion that is formed in a shape of being capable of engaging with the first engagement portion at a plurality of rotational-direction relative angles around the first center axis and the second center axis.

Because the first engagement portion of the electric valve according to the present invention can be engaged with the second engagement portion at the plurality of rotational-direction relative angles, the first valve body of being unable to rotate relative to the first engagement portion is also attached to the second valve body at the plurality of rotational-direction relative angles. Therefore, the electric valve can be produced by easily changing the positions of the valve openings of the first valve body and the second valve body.

Moreover, in the electric valve according to the present invention, one of the first engagement portion and the second engagement portion preferably includes, on a surface that contacts another thereof, a first engagement element that is formed to protrude from the one side to the other side, and the other of the first engagement portion and the second engagement portion preferably includes, on a surface that contacts the one, a second engagement element that is formed to be recessed to be capable of being engaged with the first engagement element.

According to the electric valve of the present invention, the first engagement portion and the second engagement portion can be configured with a simple shape of a protrusion and a recess that can be engaged at the plurality of rotational-direction relative angles with the first center axis and the second center axis as the rotation center. Therefore, the electric valve can be produced by easily changing the positions of the valve openings.

Moreover, in the electric valve according to the present invention, a cross-sectional shape perpendicular to the first center axis of the first engagement portion is preferably a polygon.

Because the engagement shape of the first engagement portion can be configured as a flat surface that is easily processed by taking the cross-sectional shape of the first engagement portion of the electric valve according to the present invention as a polygon, the first engagement portion can be easily produced. Moreover, because the corner of the polygon becomes the protrusion, a mechanical strength of the protrusion becomes relatively high.

Moreover, in the electric valve according to the present invention, the first valve body is preferably formed in a cylindrical shape having a smaller diameter than that of the second valve body, and the first engagement portion is preferably a protruding portion that is integrally formed on the first valve body.

When the first valve body of the electric valve according to the present invention is formed in a smaller-diameter cylindrical shape than that of the second valve body, it is possible to easily secure a flow path area inside the cylindrical shape of the first valve body by taking the protruding portion that is integrally formed on the first valve body as the first engagement portion.

Moreover, in the electric valve according to the present invention, the first valve body has preferably a central hole that is formed coaxially with the first center axis, the central hole is preferably formed in a shape of being capable of engaging with the first engagement portion at a plurality of rotational-direction relative angles around the first center axis, and the first engagement portion is preferably a rotating shaft that is fitted into the central hole and the second engagement portion.

In the electric valve according to the present invention, the first valve body has the central hole that is formed coaxially with the first center axis, and the first engagement portion is the rotating shaft that is fitted into the central hole and the second engagement portion. For that reason, the first engagement portion can be formed by using the rotating shaft that rotates the first valve body and the second valve body, and thus the electric valve can be efficiently configured. Therefore, the electric valve can be produced by easily changing the positions of the valve openings.

### Brief Description of Drawings

FIG. 1 is an overall schematic view illustrating a cooling system including an electric valve according to an embodiment of the present invention.
FIG. 2 is a vertical cross-sectional view illustrating the electric valve illustrated in FIG. 1.
FIG. 3 is a perspective view illustrating a first valve body and a second valve body included in the electric valve illustrated in FIG. 1.
FIG. 4 is a perspective view illustrating a center axis of the electric valve illustrated in FIG. 1.
FIG. 5 is a top view illustrating a rotational-direction relative angle between the first valve body and the second valve body included in the electric valve illustrated in FIG. 1.
FIG. 6 is a vertical cross-sectional view illustrating a first engagement portion included in the electric valve illustrated in FIG. 1.
FIG. 7 is a vertical cross-sectional view illustrating a second engagement portion included in the electric valve illustrated in FIG. 1.
FIG. 8 is a vertical cross-sectional view illustrating a modified example of the first engagement portion included in the electric valve illustrated in FIG. 1.
FIG. 9 is a vertical cross-sectional view illustrating a modified example of the second engagement portion included in the electric valve illustrated in FIG. 1.
FIG. 10 is a vertical cross-sectional view illustrating another modified example of the first engagement portion included in the electric valve illustrated in FIG. 1.
FIG. 11 is a vertical cross-sectional view illustrating another modified example of the second engagement portion included in the electric valve illustrated in FIG. 1.

### Description of Embodiments

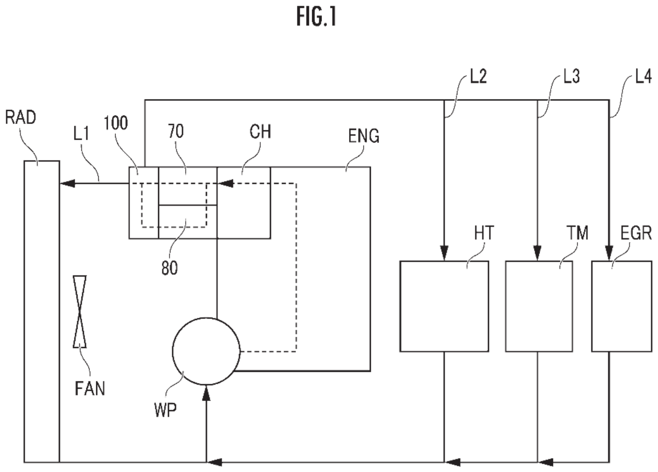

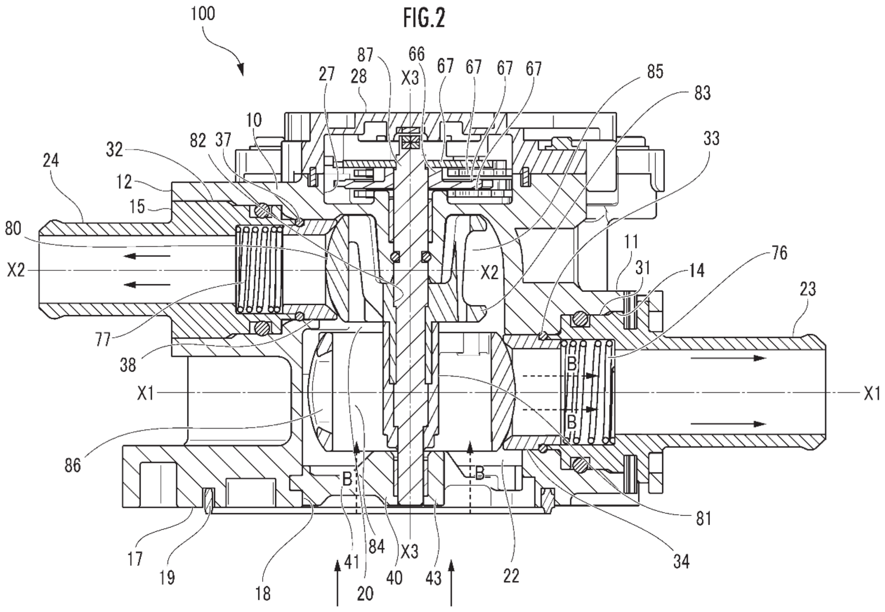

An electric valve 100 according to an embodiment of the present invention will be described with reference to FIGS. 1 and 2. FIG. 1 is an overall schematic view illustrating a cooling system including the electric valve 100 according to the embodiment of the present invention. FIG. 2 is a vertical cross-sectional view illustrating the electric valve 100.

The automotive cooling system to which the electric valve 100 is applied will be described with reference to FIG. 1. The electric valve 100 is utilizable as a flow-rate control valve in the cooling system, and can be used in the automotive cooling system, for example. The electric valve 100 used in the automotive cooling system is attached to an upper cylinder head CH of an internal combustion engine ENG included in a vehicle, for example. The fluid, namely, cooling water of the cooling system pressurized by a water pump WP provided in the internal combustion engine ENG is introduced into the electric valve 100. The electric valve 100 adjusts the supplied amount of the cooling water and distributes the adjusted cooling water to a radiator RAD and cooling water utilization devices. The electric valve 100 includes a valve body 80 that is a valve that adjusts a flow rate of the cooling water sent from the electric valve 100. Note that an up-down direction in FIG. 2 is described as an up-down direction of the electric valve 100.

The electric valve 100 has a flow path through which the cooling water flows to the radiator RAD. The flow path is a second flow path B. The automotive cooling system controls the opening and closing of the electric valve 100 by using a control device that is not illustrated. In addition to the open/close control based on only cooling water temperature Tx, the electric valve 100 is also controlled in accordance with a vehicle traveling state, etc.

The cooling water introduced into the electric valve 100 is sent to the radiator RAD that is a heat radiator and a plurality of cooling water utilization devices. The cooling water utilization devices include a heater HT, a transmission TM, such as AT and CVT, and an exhaust gas recirculation device EGR, for example, and are provided with devices required for the vehicle.

A pipe L1 is connected between the electric valve 100 and the radiator RAD. The cooling water to the radiator RAD is sent from the electric valve 100 through a feed pipe L1. The radiator RAD includes a blower fan that sends wind to the radiator RAD for the sake of heat radiation. The cooling water radiates heat while passing through the radiator RAD to decrease temperature. The cooling water that has passed through the radiator RAD is returned to the internal combustion engine ENG through a return pipe L1.

The cooling water is sent through feed pipes L2, L3, and L4 from the electric valve 100 to the heater HT, the transmission TM, and the exhaust gas recirculation device EGR. The cooling water that has passed through the cooling water utilization devices is returned to the internal combustion engine ENG through return pipes L2, L3, and L4. The cooling water returned to the internal combustion engine ENG is pressurized by the water pump WP and is again sent to circulate between the radiator RAD and the cooling water utilization devices. The cooling water utilization devices do not include all of the above cooling water utilization devices, but may select and include one or more of the devices. Alternatively, the cooling water utilization devices may include a device other than the above devices, and, for example, may include an oil cooler. In the example illustrated in FIG. 1, the pipes L2, L3, and L4 have sharing portions on the feed side and return side, but the pipes L2, L3, and L4 may be independent pipes without sharing portions.

The configuration of the electric valve 100 will be described with reference to FIG. 2. The electric valve 100 includes a housing 10 forming the main body of the electric valve 100, and "a motor (not illustrated), a reduction gear 66, and the valve body 80", which are housed in the housing 10.

The housing 10 will be described with reference to FIG. 2. The housing 10 includes a first outlet portion 11 from which the cooling water to the radiator RAD is sent, a second outlet portion 12 from which the cooling water to the cooling water utilization devices is sent, and an inlet portion 18 that introduces the cooling water from the internal combustion engine ENG. Furthermore, the housing 10 includes a valve housing portion 20, a motor housing portion (not illustrated), and a reduction gear housing portion 27. The motor housing portion (not illustrated) is provided on the side portion of the valve housing portion 20, and the reduction gear housing portion 27 is provided on the upper portion of the valve housing portion 20. The valve device 100 abuts the lower surface of the valve housing portion 20 against the cylinder head CH to be fixed.

The housing 10 is integrally formed from a resin material. Because the housing 10 is formed from a resin material or a lightweight metal material, the electric valve 100 can be lightly formed. Therefore, it is possible to reduce the fuel consumption of the vehicle to which the electric valve 100 is attached. Alternatively, the valve housing portion 20, the motor housing portion (not illustrated), and the reduction gear housing portion 27 may be assembled by separately forming one of the three portions or by separately forming the three portions. Alternatively, one or more of the valve housing portion 20, the motor housing portion (not illustrated), and the reduction gear housing portion 27 may be formed from a material other than the resin material, for example, an aluminum alloy.

The first outlet portion 11 and the second outlet portion 12 that are outlets for the cooling water will be described with reference to FIG. 2. A first adapter 23 and a second adapter 24 are respectively fixed to the first outlet portion 11 and the second outlet portion 12. The first adapter 23 to the second adapter 24 are members that have hollow cylindrical portions to which one or more of the pipes L1 to L4 are connected. One end 31 of the first adapter 23 is inserted into a first opening 14 of the first outlet portion 11. One end 32 of the second adapter 24 is inserted into a second opening 15 of the second outlet portion 12.

A pipe L1 (not illustrated) that sends the cooling water to the radiator RAD is connected to an open end of the first adapter 23. A pipe L2 (not illustrated) that sends the cooling water to one, e.g., the heater HT, of the cooling water utilization devices is connected to an open end of the second adapter 24. The cooling water utilization device connected to the second adapter 24 may be appropriately selected by the vehicle in which the valve device 100 is included, for example, to connect the exhaust gas recirculation device EGR thereto. Moreover, the number of the cooling water utilization devices connected to the second adapter 24 is not limited to one, and two or more may be connected via a bifurcated pipe that branches the flow path.

Each of the one end 31 of the first adapter 23 and the one end 32 of the second adapter 24 includes a sealing device that includes a seal and a spring. The one end 31 of the first adapter 23 includes a seal 33 and a spring 76, and the one end 32 of the second adapter 24 includes a seal 37 and a spring 77. The seals 33 and 37 are formed from an elastic material, e.g., a resin material, a rubber, or the like.

The one ends 31 and 32 are formed in a cylindrical shape having an opening. The springs 76 and 77 formed to have the outer diameters slightly smaller than the inner diameters of the one ends 31 and 32 are inserted into the openings of the one ends 31 and 32. Annular surfaces perpendicular to the center axes X1 and X2 of the one ends 31 and 32 are respectively provided on the inner surfaces of the openings of the one ends 31 and 32.

Cylindrical members 34 and 38 are respectively arranged between the valve body 80 and the one ends 31 and 32. The cylindrical members 34 and 38 respectively contact with corresponding portions of the valve body 80. The cylindrical members 34 and 38 are respectively attached to the springs 76 and 77 by respectively abutting against their one ends. In other words, the cylindrical members 34 and 38 are respectively pressed by the springs 76 and 77 against corresponding curved surfaces of the valve body 80. Therefore, even when the valve body 80 is activated and rotated, the cylindrical members 34 and 38 biased by the springs 76 and 77 follow up to maintain the contact state with the valve body 80. For that reason, the cooling water flowing out of the valve body 80 is not leaked by the cylindrical members 34 and 38 and the seals 33 and 37, and can flow through the first adapter 23 and the second adapter 24.

An abutment portion 17 provided on the lower portion of the valve housing portion 20 will be described with reference to FIG. 2. A cylinder head opening OP that is open upward is provided in the cylinder head CH of the internal combustion engine ENG. The abutment portion 17 has a flat surface to be able to abut against an attaching portion of the cylinder head CH of the housing 10. The abutment portion 17 is provided with the inlet portion 18 corresponding to the opening shape of the cylinder head opening OP. In a state where the inlet portion 18 matches the cylinder head opening OP, the valve device 100 abuts against the upper surface of the cylinder head CH and is fixed to the cylinder head CH with a bolt (not illustrated). The inlet portion 18 is an opening that is formed in the abutment portion 17.

The abutment portion 17 includes a seal 19 that is provided to surround the outside of the inlet portion 18 in the abutment portion 17. The cooling water pressurized by the water pump WP is sealed by the seal 19 not to be leaked, and is introduced into the inlet portion 18 from the cylinder head opening OP of the internal combustion engine ENG.

The electric valve 100 has therein an internal space 22 that communicates with the inlet portion 18 and is formed up to the upper portion of the valve housing portion 20. The valve body 80 is housed in the internal space 22.

The motor (not illustrated) is housed in the motor housing portion (not illustrated) that is a sealed space provided on the side portion of the valve housing portion 20. Moreover, as illustrated in FIG. 2, the reduction gear 66 is housed in the reduction gear housing portion 27 that is formed on the upper portion of the valve device 100. The reduction gear housing portion 27 is a sealed space that is sealed by an upper cover 28. The reduction gear 66 includes a plurality of gears 67, and is configured as a multi-stage speed reduction mechanism by the first-stage gear 67, into which a driving force of a motor (not illustrated) is input, to the final-stage gear 67. The plurality of gears 67 are formed of spur gears whose diameters and the number of teeth are different, and are respectively rotatably supported by rotating shafts (not illustrated) that are provided in parallel with each other.

A rotating shaft 87 of the valve body 80 is fitted into a fitting hole that is provided in the center of the final-stage gear 67. An output shaft (not illustrated) of the motor (not illustrated) is fitted into a fitting hole that is provided in the center of the first-stage gear 67, and the motor (not illustrated) is rotationally controlled by the control device to transfer a rotational torque by the reduction gear 66. The rotational force transferred to the final-stage gear 67 rotates the valve body 80 by a predetermined rotation angle in one direction or the other direction.

The reduction gear 66 can have a configuration other than the above. The shape, the size, the number of teeth, the direction of the rotating shaft, and the arrangement inside the reduction gear housing portion 27 of the plurality of gears 67 constituting the reduction gear 66 are appropriately determined in accordance with the required output torque, the size of the reduction gear housing portion 27, and the like.

A supporting portion 40 is fitted into the inlet portion 18. The supporting portion 40 is a member that supports the lower end of the rotating shaft 87. The supporting portion 40 includes a plurality of rod-shaped portions 41 and a central portion 43 whose center axis is coaxial with the rotating shaft 87. The supporting portion 40 is formed so that the rod-shaped portion 41 radially protrudes from the central portion 43 when viewed from above. The rod-shaped portions 41 according to the present embodiment includes three rod-shaped portions that are provided every 120 degrees around the center of the central portion 43, and the supporting portion 40 is formed in a substantially Y-shape.

Because the rod-shaped portions 41 are arranged in a space through which the cooling water flows, each of the rod-shaped portions 41 is formed narrow while having the required strength. The number of the rod-shaped portions 41 may be a number other than three. For example, the rod-shaped portions 41 may include two rod-shaped portions that are provided every 180 degrees around the center of the central portion 43 and the supporting portion 40 may be formed in an I-shape. Alternatively, the rod-shaped portions 41 may include four rod-shaped portions that are provided every 90 degrees around the center of the central portion 43 and the supporting portion 40 may be formed in a cross shape.

### [Configuration of Valve body 80]

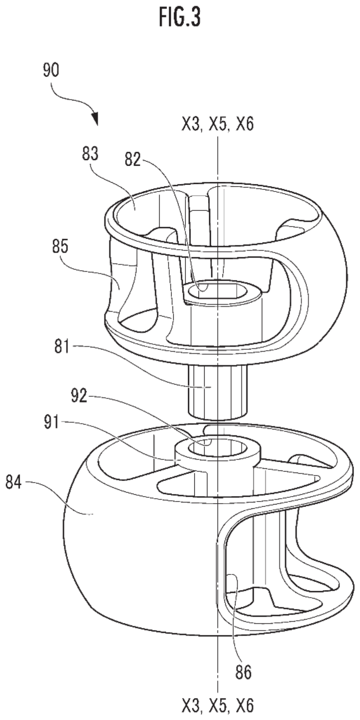

The configuration of the valve body 80 will be described with reference to FIG. 3. FIG. 3 is a perspective view illustrating the valve body 80 that includes a first valve body 83 and a second valve body 84. The valve body 80 includes the first valve body 83, the second valve body 84, and the rotating shaft 87. The valve body 80 is an on-off valve that is activated by a driving force of the motor (not illustrated) transferred via the reduction gear 66. The valve body 80 is housed in the internal space 22 that is the internal space of the valve housing portion 20. The valve body 80 includes the first valve body 83 having a first center axis X5 and the second valve body 84 having a second center axis X6. Each of the first valve body 83 and the second valve body 84 has an outer peripheral surface that is formed to protrude in an arc shape when viewed from the side. The first valve body 83 and the second valve body 84 have the first center axis X5 and the second center axis X6 that are coaxially arranged, and are arranged to have contact with each other. The coaxially arranged first center axis X5 and second center axis X6 form a center axis X3 of the valve body 80.

The electric valve 100 according to the present invention includes the valve body 80 and the motor (not illustrated) that drives the valve body 80.

The lower-side second valve body 84 of the valve body 80 is located on an extended line of the first adapter 23 in a longitudinal direction. Moreover, the upper-side first valve body 83 of the valve body 80 is located on an extended line of the second adapter 24 in the longitudinal direction. The outer peripheral surfaces of the first valve body 83 and the second valve body 84 are respectively provided with valve openings 85 and 86 that communicate with the internal space of the valve body 80. The valve openings 85 and 86 are formed as elongated holes that are long in the circumferential direction, and are open in a predetermined angular range on the outer peripheral surfaces of the first valve body 83 and the second valve body 84 around the respective center axes X5 and X6 when viewed from above.

The first valve body 83 and the second valve body 84 are configured to be integrally rotated by the driving force of the rotating shaft 87 of the reduction gear 66. On the other hand, sending temperature ranges of the cooling water to be sent to the radiator RAD and the cooling water utilization devices that are connected to the electric valve 100 are different depending on the cooling water utilization devices. For that reason, opening angles of the elongated holes of the valve opening 85 and the valve opening 86 and circumferential opening ranges on the outer peripheral surfaces of the first valve body 83 and the second valve body 84 are determined to have the optimum open/closed state of the valve for each of the radiator RAD and the cooling water utilization devices.

The first valve body 83 includes a first engagement portion 81 that is a portion that is coaxially with the first center axis X5 and is provided to protrude. The second valve body 84 includes a second engagement portion 91 that is coaxially with the second center axis X6 and is provided in a shape of being capable of engaging with the first engagement portion 81. The first valve body 83 is connected by engaging the first engagement portion 81 that is provided to protrude with the second engagement portion 91.

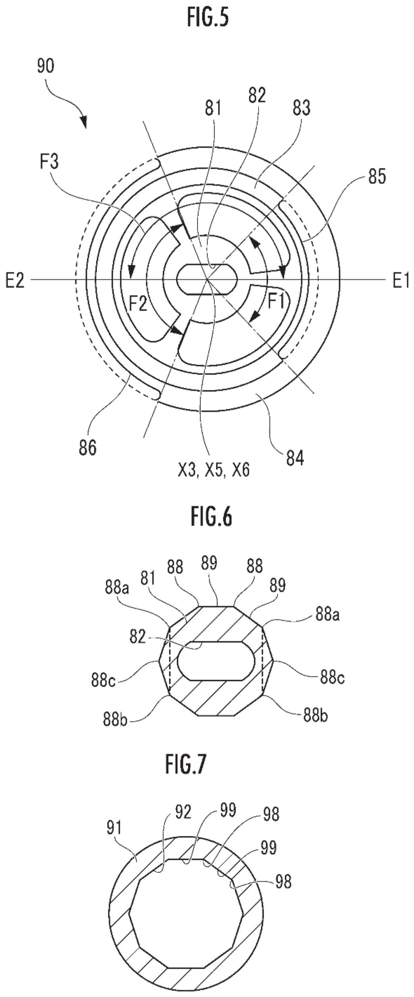

FIG. 7 illustrates the second engagement portion 91 corresponding to the first engagement portion 81. The second engagement portion 91 has a central hole 92 into which the first engagement portion 81 can be fitted. The cross-sectional shape perpendicular to the first center axis X5 of the central hole 92 is formed as a regular decagon consisting of ten surface portions 99 corresponding to the first engagement portion 81. The central hole 92 is formed as a through-hole whose length is the same as that of the portion into which the first engagement portion 81 is fitted. The second engagement portion 91 is configured by the central hole 92, and is provided with second engagement elements 98 (corners of regular decagon) of which each is arranged between the adjacent two surface portions 99. Note that the central hole 92 may be formed to be longer than the length of the portion into which the first engagement portion 81 is fitted. Moreover, the central hole 92 may be a blind hole whose one side is closed. The first engagement portion 81 is formed in a shape of being capable of engaging with the second engagement portion 91 at the plurality of rotational-direction angular positions around the second center axis X6 of the second engagement portion 91.

The first engagement portion 81 of the electric valve 100 according to the present invention is a protruding portion that is integrally formed on the first valve body 83. For that reason, the first engagement portion 81 is engaged with the second valve body 84 easily and reliably at an arbitrary rotational-direction relative angle. Therefore, the electric valve 100 can be produced by easily changing the positions of the valve openings 85 and 86.

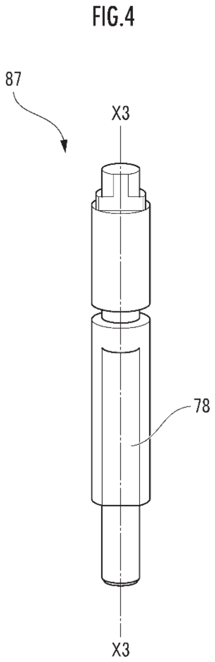

The engagement state of the first valve body 83 and the second valve body 84 will be described with reference to FIGS. 3 and 4. FIG. 4 is a perspective view illustrating the rotating shaft 87. The valve body 80 is formed in a substantially cylindrical shape that has therein a space, and includes the first engagement portion 81 that is provided with a central hole 82 and the rotating shaft 87 that is fitted into the central hole 82. The inside of the valve body 80 has a space that is a flow path of the cooling water except that the first engagement portion 81. In a state where the first engagement portion 81 is engaged with the second engagement portion 91, the rotating shaft 87 is fitted into the central hole 82 to rotationally drive the first valve body 83 and the second valve body 84. The shape of the central hole 82 and the shape of a portion abutting against the central hole 82 of the rotating shaft 87 are formed so that they can be fitted together. As illustrated in FIG. 4, a fitting portion 78 of the rotating shaft 87 is formed in a shape obtained by cutting portions protruding from one set of opposed parallel flat surfaces of the outer peripheral surface having a circular cross section, that is, a shape obtained by connecting both ends of one set of opposed parallel flat surfaces by a circular arc. Because an outer surface of the fitting portion 78 is formed in the shape having the one set of parallel flat surfaces, the rotating shaft 87 can be fitted into the central hole 82 so as not to be able to rotate relative to each other. Thus, the rotating shaft 87 can transmit a rotary driving force to the central hole 82 without slipping.

Note that the cross-sectional shape of the fitting portion 78 of the rotating shaft 87 may be a so-called D-cut cross section obtained by cutting the circular outer peripheral surface by one flat surface parallel to the rotating shaft 87 instead of the above. In that case, the cross section of the central hole 82 is formed as a D-shaped hole, and the D-cut cross-sectional rotating shaft 87 is fitted into the central hole.

A point that the first engagement portion 81 and the second engagement portion 91 can be engaged with each other at a plurality of rotational-direction relative angles F3 around the center axis X3 will be described with reference to FIG. 5. FIG. 5 is a top view illustrating a state where the first valve body 83 and the second valve body 84 are connected to each other. In the present drawing, the valve opening 85 of the first valve body 83 is located rightward, and the valve opening 86 of the second valve body 84 is located leftward. The valve openings 85 and 86 are formed as elongated holes. Assuming that the rotational-direction position of the center of the valve opening 85 of the first valve body 83 is E1 and the rotational-direction position of the center of the valve opening 86 of the second valve body 84 is E2, the rotational-direction relative angle of both is F3. In the case of FIG. 5, F3 is about 180 degrees. When assembling the first valve body 83 and the second valve body 84, the valve device 100 of the present invention can set the rotational-direction relative angle F3 between the valve opening 85 of the first valve body 83 and the valve opening 86 of the second valve body 84 to a desired angle.

A connection state of the first engagement portion 81 and the second engagement portion 91 will be described with reference to FIG. 3. The first valve body 83 and the second valve body 84 are fixed by the first engagement portion 81 and the second engagement portion 91 at the desired rotational-direction relative angle F3.

The first valve body 83 and the second valve body 84 are arranged so that the first center axis X5 and the second center axis X6 are coaxial with each other. One of the first valve body 83 and the second valve body 84 is provided with the first engagement portion 81 that is coaxial with one of the center axes X5 and X6 and is provided to protrude. Moreover, the other of the first valve body 83 and the second valve body 84 is provided with the second engagement portion 91 that is coaxial with the other of the center axes X5 and X6 and is formed in the shape of being capable of engaging with the first engagement portion 81.

A configuration of the first engagement portion 81 and the second engagement portion 91 will be described with reference to FIGS. 6 and 7. The first engagement portion 81 has a polygonal cross-sectional shape perpendicular to the first center axis X5. The polygon may be a regular polygon such as a regular triangle, a regular square, a regular pentagon, and a regular hexagon.

FIG. 6 illustrates the first engagement portion 81 whose cross-sectional shape is formed in a regular decagon. The first engagement portion 81 has the central hole 82 in the center. The central hole 82 is formed as a through-hole having the same length as the length of a portion into which the rotating shaft 87 is fitted. The first engagement portion 81 includes, on the outer surface of the first engagement portion 81, first engagement elements 88 and surface portions 89 of which each is arranged between the adjacent two first engagement elements 88. Assuming that the polygon is an n-gon, n first engagement elements 88 and n surface portions 89 are provided. Note that the central hole 82 may be formed to be longer than the length of the portion into which the rotating shaft 87 is fitted. Moreover, the central hole 82 may be a blind hole whose one side is closed. In this case, the rotating shaft 87 is supported at the other end.

The cross-sectional shape perpendicular to the first center axis X5 of the first engagement portion 81 of the electric valve 100 according to the present invention is a polygon. For that reason, because the engagement shape of the first engagement portion 81 can be configured as a flat surface that is easily processed, the first engagement portion 81 can be easily produced. Therefore, the electric valve 100 can be produced by easily changing the rotational-direction relative angle of the valve openings 85 and 86.

FIG. 7 illustrates the second engagement portion 91 corresponding to the first engagement portion 81. The second engagement portion 91 includes the central hole 92 into which the first engagement portion 81 can be fitted. The cross-sectional shape perpendicular to the first center axis X5 of the central hole 92 is formed in a regular decagon corresponding to the first engagement portion 81. The central hole 92 is formed as a through-hole having the same length as the length of the portion into which the first engagement portion 81 is fitted. The second engagement portion 91 includes, in the central hole 92, the second engagement elements 98 and the surface portions 99 of which each is arranged between the adjacent two second engagement elements 98. Note that the central hole 92 may be formed to be longer than the length of the portion into which the first engagement portion 81 is fitted. Moreover, the central hole 92 may be a blind hole whose one side is closed.

The electric valve 100 according to the present invention includes: the first valve body 83 that is formed in a cylindrical shape and has the valve opening 85 and the first center axis X5; the second valve body 84 that is formed in a cylindrical shape and has the valve opening 86 and the second center axis X6; and the first engagement portion 81 that is arranged coaxially with the first center axis X5 and in a state of being unable to rotate relative to the first valve body 83, the first valve body 83 and the second valve body 84 are arranged coaxially with the first center axis X5 and the second center axis X6, the second valve body 84 includes the second engagement portion 91 that is formed in a shape of being capable of engaging with the first engagement portion 81, and the first valve body 83 and the second valve body 84 can be coupled at the plurality of rotational-direction relative angles using the first center axis X5 and the second center axis X6 as the rotation center. Therefore, the electric valve 100 can be produced by easily changing the rotational-direction relative angle of the valve openings 85 and 86 of the first valve body 83 and the second valve body 84.

The rotational-direction relative angle F3 between the first valve body 83 and the second valve body 84 can be set to the desired rotational-direction relative angle F3 by selecting a rotational-direction relative angle when the first engagement portion 81 is engaged with the second engagement portion 91. When a cross section perpendicular to the first center axis X5 of the first engagement portion 81 is formed in a regular decagon, the rotational-direction relative angle F3 can be adjusted every 36 degrees (360 degrees/10). Assuming that the polygon of the cross section is an n-gon, the rotational-direction relative angle F3 can be adjusted every 360 degrees/n. More troubles are required for the processing as the number n of the polygon is larger, but the relative angle can be adjusted in finer angle units.

In the electric valve 100 according to the present invention, one of the first engagement portion 81 and the second engagement portion 91 includes, on a surface that contacts another thereof, the first engagement elements 88, 103, and 133 that are formed to protrude from the one side to the other side, and the other of the first engagement portion 81 and the second engagement portion 91 includes, on a surface that contacts the one, the second engagement elements 98, 113, and 123 that are formed to be recessed to be capable of being engaged with the first engagement elements 88, 103, and 133. For that reason, the first engagement portion 81 and the second engagement portion 91 can be configured with a simple shape of a protrusion and a recess that can be engaged at the plurality of rotational-direction relative angles with the first center axis X5 and the second center axis X6 as the rotation center. Therefore, the electric valve 100 can be produced by easily changing the positions of the valve openings 85 and 86.

### [Operation of Valve body 80]

The operation of the valve body 80 will be described with reference to FIG. 2. The valve body 80 is opened and closed in accordance with the cooling water temperature Tx.

### <Modified examples of First engagement portion and Second engagement portion>

The engagement shape of the first engagement portion and the second engagement portion may be a shape other than the above. Hereinafter, first to fourth modified examples related to the engagement shape of the first engagement portion and the second engagement portion will be described.

### [First modified example]

The first engagement portion 81 may be formed on the rotating shaft 87, instead of the protruding portion that is integrally formed on the first valve body 83. The rotating shaft 87 is fitted into the central hole 82 of the first valve body 83 and the second engagement portion 91 of the second valve body 84, and thus the valve body may have a configuration that the rotating shaft 87 directly supports the first valve body 83 and the second valve body 84. The fitting portion 78 of the rotating shaft 87 is provided over a range where the central hole 82 and the second engagement portion 91 abut against each other, and the cross-sectional shape of the fitting portion 78 is formed in a shape of being capable of being fitted into the central hole 82 and the second engagement portion 91 and being engaged with the central hole 82 and the second engagement portion 91 so as not to rotate relative to each other. The cross-sectional shape of the fitting portion 78 is formed in a polygon including a regular polygon, a shape obtained by cutting the circular outer peripheral surface by one set of parallel flat surfaces, a D-cut shape obtained by cutting the circular outer peripheral surface by one flat surface, and the like. The hole shapes of the central hole 82 and the second engagement portion 91 are formed in a hole shape corresponding to the cross-sectional shape of the fitting portion 78.

In the electric valve 100 according to the present invention, the central hole 82 is formed in the first valve body 83 coaxially with the first center axis X5, and the first engagement portion 81 is the rotating shaft 87 that is fitted into the central hole 82 and the second engagement portion 91. For that reason, the first engagement portion 81 can be formed by using the rotating shaft 87 that rotates the first valve body 83 and the second valve body 84 to be able to efficiently configure the electric valve 100. Therefore, the electric valve 100 can be produced by easily changing the positions of the valve openings 85 and 86. Moreover, the first valve body 83 can be easily produced without a need to form the protruding portion on the first valve body 83 by using the first engagement portion 81 as the rotating shaft 87.

### [Second modified example]

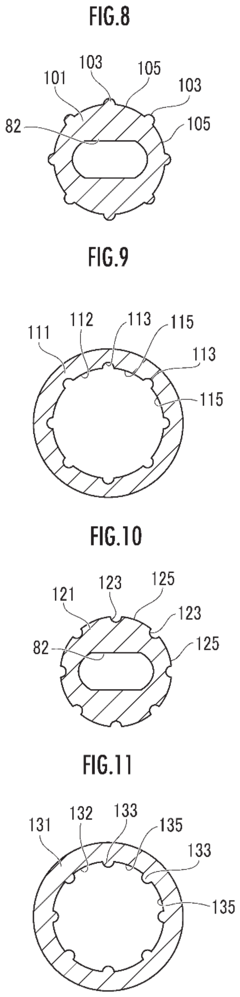

The second modified example will be described with reference to FIGS. 8 and 9. In the second modified example, the shapes of a first engagement portion 101 and a second engagement portion 111 are different from those of the above-described example of FIGS. 6 and 7. The cross-sectional shape perpendicular to the first center axis X5 of the first engagement portion 101 is formed in a shape obtained by combining a circular shape and a plurality of protrusions.

FIG. 8 illustrates the first engagement portion 101. The cross-sectional shape perpendicular to the first center axis X5 of the first engagement portion 101 is formed in a shape by which first engagement elements 103 that are a plurality of protrusions are arranged on the circumference of the circular shape at a regular interval. The first engagement portion 101 has the central hole 82 in the center. The central hole 82 is formed as a through-hole having the same length as the length of the portion into which the rotating shaft 87 is fitted. The first engagement portion 101 includes, on the outer surface of the first engagement portion 101, the plurality of first engagement elements 103 and surface portions 105 of which each is arranged between the adjacent two first engagement elements 103. Note that the central hole 82 may be formed to be longer than the length of the portion into which the rotating shaft 87 is fitted. Moreover, the central hole 82 may be a blind hole whose one side is closed.

FIG. 9 illustrates the second engagement portion 111 corresponding to the first engagement portion 101. The second engagement portion 111 has a central hole 112 into which the first engagement portion 101 can be fitted. The cross-sectional shape perpendicular to the second center axis X6 of the central hole 112 is formed in a shape obtained by combining a circular shape and second engagement elements 113 that are a plurality of recesses, which correspond to the first engagement portion 101. The central hole 112 is formed as a through-hole having the same length as the length of a portion into which the first engagement portion 101 is fitted. The second engagement portion 111 includes, in the central hole 112, the second engagement elements 113 and surface portions 115 of which each is arranged between the adjacent two second engagement elements 113. Note that the central hole 112 may be formed to be longer than the length of the portion into which the first engagement portion 101 is fitted. Moreover, the central hole 112 may be a blind hole whose one side is closed. Moreover, the contour shapes of the leading end of the first engagement element 103 and the innermost portion of the second engagement element 113 may be an arc shape or an acute angle shape where flat surfaces intersect at an acute angle if they are the same outline shape.

The rotational-direction relative angle F3 between the first valve body 83 and the second valve body 84 can be set to the desired rotational-direction relative angle F3 by selecting the second engagement elements 113 of the second engagement portion 111 into which the first engagement elements 103 of the first engagement portion 101 are respectively fitted. When eight sets of the first engagement elements 103 and the second engagement elements 113 are provided, for example, the rotational-direction relative angle F3 can be selected every 45 degrees (360 degrees/8). Assuming that the number of sets of the first engagement elements 103 and the second engagement elements 113 is n, the rotational-direction relative angle F3 can be selected every 360 degrees/n. More troubles are required for the processing as the number n is larger, but the rotational-direction relative angle F3 can be selected from among more options of the rotational-direction relative angle F3 and thus can be adjusted every finer angle.

### [Third modified example]

The third modified example will be described with reference to FIGS. 10 and 11. In the third modified example, the shapes of a first engagement portion 121 and a second engagement portion 131 are different from those of the above-described example of FIGS. 6 and 7. The cross-sectional shape perpendicular to the first center axis X5 of the first engagement portion 121 is formed in a shape obtained by combining a circular shape and a plurality of recesses.

FIG. 10 illustrates the first engagement portion 121. The cross-sectional shape perpendicular to the first center axis X5 of the first engagement portion 121 is formed in a shape by which second engagement elements 123 that are a plurality of recesses are arranged on the circumference of the circular shape at a regular interval. The first engagement portion 121 has the central hole 82 in the center. The central hole 82 is formed as a through-hole having the same length as the length of the portion into which the rotating shaft 87 is fitted. The first engagement portion 121 includes, on the outer surface of the first engagement portion 121, the plurality of second engagement elements 123 and surface portions 125 of which each is arranged between the adjacent two second engagement elements 123. Note that the central hole 82 may be formed to be longer than the length of the portion into which the rotating shaft 87 is fitted. Moreover, the central hole 82 may be a blind hole whose one side is closed. In this case, the rotating shaft 87 is supported by the housing 10 at the other end.

FIG. 11 illustrates the second engagement portion 131 corresponding to the first engagement portion 121. The second engagement portion 131 has a central hole 132 into which the first engagement portion 121 can be fitted. The cross-sectional shape perpendicular to the second center axis X6 of the central hole 132 is formed in a shape obtained by combining a circular shape and first engagement elements 133 that are a plurality of protrusions, which correspond to the first engagement portion 121. The central hole 132 is formed as a through-hole having the same length as the length of a portion into which the first engagement portion 121 is fitted. The second engagement portion 131 includes, in the central hole 132, the first engagement elements 133 and surface portions 135 of which each is arranged between the adjacent two first engagement elements 133. Note that the central hole 132 may be formed to be longer than the length of the portion into which the first engagement portion 121 is fitted. Moreover, the central hole 132 may be a blind hole whose one side is closed. Moreover, the contour shapes of the innermost portion of the second engagement element 123 and the leading end of the first engagement element 133 may be an arc shape or an acute angle shape where flat surfaces intersect at an acute angle if both are an outline shape.

The rotational-direction relative angle F3 between the first valve body 83 and the second valve body 84 can be set to the desired rotational-direction relative angle F3 by selecting the second engagement elements 123 of the first engagement portion 121 into which the first engagement elements 133 of the second engagement portion 131 are respectively fitted. When eight sets of the first engagement elements 133 and the second engagement elements 123 are provided, for example, the rotational-direction relative angle F3 can be selected every 45 degrees (360 degrees/8). Assuming that the number of sets of the first engagement elements 133 and the second engagement elements 123 is n, the rotational-direction relative angle F3 can be selected every 360 degrees/n. More troubles are required for the processing as the number n is larger, but the relative angle can be adjusted in finer angle units.

### [Fourth modified example]

Although not illustrated, the above-described shapes of the first engagement portion 81 and the second engagement portion 91 in FIGS. 6 and 7 are deformable as described below. The cross-sectional shape of the first engagement portion 81 may also be a polygon other than a regular polygon. For example, in FIG. 6, the first engagement portion may have an octagonal cross section obtained by being cut by a straight line that connects first engagement elements 88a and 88b on both sides of first engagement elements 88c that are a pair of opposing corners, and the second engagement portion 91 illustrated in FIG. 7 may be used without change to have an engagement shape that engages with each other. Alternatively, the cross-sectional shape of the first engagement portion may be a rectangle. Even in the case of this engagement shape, the first engagement portion and the second engagement portion can be engaged with each other at the plurality of rotational-direction relative angles F3 using the first center axis X5 and the second center axis X6 as the rotation center. When the first engagement portion, namely, the corner is reduced, the first engagement portion can be more easily produced.

The electric valve 100 according to the present invention includes: the first valve body 83 that is formed in a cylindrical shape and has the valve opening 85 and the first center axis X5; the second valve body 84 that is formed in a cylindrical shape and has the valve opening 86 and the second center axis X6; and the first engagement portion 81 that is arranged coaxially with the first center axis X5 and in a state of being unable to rotate relative to the first valve body 83, the first valve body 83 and the second valve body 84 are arranged coaxially with the first center axis X5 and the second center axis X6, the second valve body 84 includes the second engagement portion 91 that is formed in a shape of being capable of engaging with the first engagement portion 81, and the first valve body 83 and the second valve body 84 can be coupled at the plurality of rotational-direction relative angles using the first center axis X5 and the second center axis X6 as the rotation center.

The electric valve 100 according to the present invention includes: the first valve body 83 that is formed in a cylindrical shape and has the valve opening 85 and the first center axis X5; the second valve body 84 that is formed in a cylindrical shape and has the valve opening 86 and the second center axis X6; and the first engagement portion 81 that is arranged coaxially with the first center axis X5 and in a state of being unable to rotate relative to the first valve body 83, the first valve body 83 and the second valve body 84 are arranged coaxially with the first center axis X5 and the second center axis X6, the second valve body 84 includes the second engagement portion 91 that is formed in a shape of being capable of engaging with the first engagement portion 81, and the first valve body 83 and the second valve body 84 can be coupled at the plurality of rotational-direction relative angles using the first center axis X5 and the second center axis X6 as the rotation center. Therefore, the electric valve 100 can be produced by easily changing the rotational-direction relative angle of the valve openings 85 and 86 of the first valve body 83 and the second valve body 84.

Moreover, in the electric valve 100 according to the present invention, one of the first engagement portion 81 and the second engagement portion 91 preferably includes, on a surface that contacts another thereof, the first engagement elements 88, 103, and 133 that are formed to protrude from the one side to the other side, and the other of the first engagement portion 81 and the second engagement portion preferably includes, on a surface that contacts the one, the second engagement elements 98, 113, and 123 that are formed to be recessed to be capable of being engaged with the first engagement elements.

In the electric valve 100 according to the present invention, one of the first engagement portion 81 and the second engagement portion 91 includes, on a surface that contacts another thereof, the first engagement elements 88, 103, and 133 that are formed to protrude from the one side to the other side, and the other of the first engagement portion 81 and the second engagement portion 91 includes, on a surface that contacts the one, the second engagement elements 98, 113, and 123 that are formed to be recessed to be capable of being engaged with the first engagement elements 88, 103, and 133. For that reason, the first engagement portion 81 and the second engagement portion 91 can be configured with a simple shape of a protrusion and a recess that can be engaged at the plurality of rotational-direction relative angles with the first center axis X5 and the second center axis X6 as the rotation center. Therefore, the electric valve 100 can be produced by easily changing the positions of the valve openings 85 and 86.

Moreover, a cross-sectional shape perpendicular to the first center axis X5 of the first engagement portion 81 of the electric valve 100 according to the present invention is preferably a polygon.

The cross-sectional shape perpendicular to the first center axis X5 of the first engagement portion 81 of the electric valve 100 according to the present invention is a polygon. For that reason, because the engagement shape of the first engagement portion 81 can be configured as a flat surface that is easily processed, the first engagement portion 81 can be easily produced. Therefore, the electric valve 100 can be produced by easily changing the rotational-direction relative angle of the valve openings 85 and 86.

Moreover, the first engagement portion 81 of the electric valve 100 according to the present invention is preferably a protruding portion that is integrally formed on the first valve body 83.

The first engagement portion 81 of the electric valve 100 according to the present invention is the protruding portion that is integrally formed on the first valve body 83. For that reason, the first engagement portion 81 that is provided to protrude from a portion where the first valve body 83 and the second valve body 84 are adjacent is engaged with the second valve body 84 easily and reliably at an arbitrary rotational-direction relative angle. Therefore, the electric valve 100 can be produced by easily changing the positions of the valve openings 85 and 86.

Moreover, in the electric valve 100 according to the present invention, the first valve body 83 preferably has the central hole 82 that is formed coaxially with the first center axis X5, and the first engagement portion 81 is preferably the rotating shaft 87 that is fitted into the central hole 82 and the second engagement portion 91.

In the electric valve 100 according to the present invention, the first valve body 83 has the central hole 82 that is formed coaxially with the first center axis X5, and the first engagement portion 81 is the rotating shaft 87 that is fitted into the central hole 82 and the second engagement portion 91. For that reason, the first engagement portion 81 can be formed by using the rotating shaft 87 that rotates the first valve body 83 and the second valve body 84 to be able to efficiently configure the electric valve 100. Therefore, the electric valve 100 can be produced by easily changing the positions of the valve openings 85 and 86.

Moreover, the electric valve 100 according to the present invention preferably includes a motor (not illustrated) that drives the valve body 80.

The electric valve 100 according to the present invention includes the motor (not illustrated) that drives the valve body 80. For that reason, the electric valve 100 that can be engaged at the plurality of rotational-direction relative angles can be easily configured. Therefore, the electric valve 100 can be produced by easily changing the rotational-direction relative angle of the valve openings 85 and 86.

### <Other embodiments>

The valve device of the present invention is not limited to the embodiment, and may be appropriately changed without departing from the spirit of the present invention. For example, the electric valve 100 may be applied to one other than the vehicle that includes only the internal combustion engine ENG as a driving source, or may be applied to a device for a vehicle cooled by fluid, such as the internal combustion engine ENG included in a hybrid vehicle and a driving force generating motor included in an electric vehicle, or a device other than the vehicle.

Moreover, the electric valve 100 of the present invention may have a bypass path with a thermostat interposed therein. Moreover, in the present invention, a material of each member, each pipe position, and each device arrangement in a pipe path described in the embodiment may be appropriately changed.

### Description of Reference Numerals

- 10: housing
- 11: first outlet portion
- 12: second outlet portion
- 13: third outlet portion
- 18: inlet portion
- 22: internal space
- 23: first adapter
- 24: second adapter
- 31, 32: one end
- 34, 38: cylindrical member
- 40: supporting portion
- 41: rod-shaped portion
- 43: central portion
- 65: motor
- 66: reduction gear
- 80: valve body
- 81: first engagement portion
- 82: central hole
- 83: first valve body
- 84: second valve body
- 85, 86: valve opening
- 87: rotating shaft
- 88, 103, 133: first engagement element
- 91: second engagement portion
- 98, 113, 123: second engagement element
- 100: electric valve
- 112: central hole
- T1: first temperature
- T2: second temperature
- Tx: fluid temperature (cooling water temperature)
- ENG: internal combustion engine
- CH: cylinder head
- WP: water pump
- RAD: radiator
- HT: heater
- TM: transmission
- EGR: exhaust gas recirculation device

## Claims

1. An electric valve comprising:
a first valve body that is formed in a cylindrical shape and has a valve opening and a first center axis;
a second valve body that is formed in a cylindrical shape and has a valve opening and a second center axis; and
a first engagement portion that is arranged coaxially with the first center axis and in a state of being unable to rotate relative to the first valve body, wherein
the first valve body and the second valve body are arranged coaxially with the first center axis and the second center axis, and
the second valve body includes a second engagement portion that is formed in a shape of being capable of engaging with the first engagement portion at a plurality of rotational-direction relative angles around the first center axis and the second center axis.

2. The electric valve according to Claim 1, wherein
one of the first engagement portion and the second engagement portion includes, on a surface that contacts another thereof, a first engagement element that is formed to protrude from the one side to the other side, and
the other of the first engagement portion and the second engagement portion includes, on a surface that contacts the one, a second engagement element that is formed to be recessed to be capable of being engaged with the first engagement element.

3. The electric valve according to Claim 2, wherein a cross-sectional shape perpendicular to the first center axis of the first engagement portion is a polygon.

4. The electric valve according to Claim 3, wherein
the first valve body is formed in a cylindrical shape having a smaller diameter than that of the second valve body, and
the first engagement portion is a protruding portion that is integrally formed on the first valve body.

5. The electric valve according to Claim 3, wherein
the first valve body has a central hole that is formed coaxially with the first center axis,
the central hole is formed in a shape of being capable of engaging with the first engagement portion at a plurality of rotational-direction relative angles around the first center axis, and
the first engagement portion is a rotating shaft that is fitted into the central hole and the second engagement portion.

6. The electric valve according to any one of Claims 1 to 5, further comprising:
a motor that drives the first valve body and the second valve body.
